# NOUVEAU FASCICULE DE BREVET EUROPEEN

(11) **EP 3 182 213 B2**
(45) Date de publication et mention de la décision concernant l'opposition: **21.10.2020**
(45) Mention de la délivrance du brevet: 12.09.2018
(21) Numéro de dépôt: 15200453.7
(22) Date de dépôt: 16.12.2015
(51) Int. Cl.: G04B 15/14, G04B 17/04, G04B 17/06, F16C 11/12

(54) **MÉCANISME DE RÉGLAGE D'UNE VITESSE MOYENNE DANS UN MOUVEMENT D'HORLOGERIE ET MOUVEMENT D'HORLOGERIE**
EINSTELLMECHANISMUS DER MITTLEREN GESCHWINDIGKEIT IN EINEM UHRWERK, UND ENTSPRECHENDES UHRWERK
MECHANISM FOR ADJUSTING AN AVERAGE SPEED IN A CLOCK MOVEMENT AND CLOCK MOVEMENT

(43) Date de publication de la demande: 21.06.2017
(73) Titulaire: Société anonyme de la Manufacture d'Horlogerie Audemars Piguet & Cie, 1348 Le Brassus (CH)
(72) Inventeur: Robuschi, Nicolò, 43015 Noceto (IT); Papi, Giulio, 2300 La Chaux-de-Fonds (CH)
(74) Mandataire: BOVARD AG

(56) Documents cités:
- EP-A1- 2 911 012
- FR-A- 808 725
- FR-A1- 2 372 346

## Description

### Domaine technique de l'invention

La présente invention se rapporte au domaine de l'horlogerie mécanique. Plus précisément, elle concerne un mécanisme de réglage d'une vitesse moyenne dans un mouvement d'horlogerie, ainsi qu'un mouvement d'horlogerie.

### État de la technique

Dans un mouvement d'horlogerie, un organe moteur tel qu'un ressort de barillet fournit l'énergie d'entraînement, qu'un rouage de finissage transmet à la roue d'échappement d'un échappement interagissant avec un oscillateur mécanique. Les vitesses des engrenages dans le rouage de finissage sont toutes proportionnelles à une vitesse de rotation, qui est la vitesse de rotation moyenne de la roue d'échappement. La vitesse de rotation moyenne de cette roue d'échappement est imposée par les oscillations de l'oscillateur mécanique. Plus précisément, la fonction de l'oscillateur mécanique est de fournir la cadence à laquelle se succèdent les pas angulaires de la roue d'échappement. Cette cadence doit être la plus stable possible.

Dans le brevet français FR 808 725 A délivré le 24 novembre 1936, il est décrit une solution très ancienne, à savoir un oscillateur résultant de l'association d'un balancier et d'une lame de ressort qui est portée par ce balancier et qui comporte deux extrémités libres chacune engagée entre deux chevilles de guidage. En plus de la lame de rappel, le balancier porte une palette d'entrée et une palette de sortie prévues pour coopérer alternativement avec les dents d'une roue au sein d'un échappement.

Dans la demande de brevet suisse CH 709 291 et dans la demande de brevet européen EP 2 911 012 A1, il est proposé un oscillateur mécanique sans ressort spiral ni arbre de montage. Son balancier est porté par plusieurs lames élastiquement flexibles. Le balancier pivote sur lui-même, moyennant une flexion des lames élastiquement flexibles qui rappellent ce balancier vers une position de point mort, en plus de le porter. Les lames élastiquement flexibles sont décalées entre elles dans le sens de l'épaisseur du balancier. Elles se croisent aux 7/8ème de leurs longueurs respectives.

Dans la demande de brevet européen EP 1 736 838, il est décrit l'association d'un échappement et d'un oscillateur dont le balancier est porté par plusieurs lames élastiquement flexibles. L'échappement comprend un organe de transmission qui est fixé au balancier. Deux doigts élastiques de cet organe de transmission coopèrent alternativement avec la denture d'une roue d'échappement. La fréquence d'oscillation du balancier dépend dans une large mesure du degré d'armage d'un ressort de barillet constituant l'organe moteur. Cela nuit à l'exactitude du comptage du temps dès lors que le degré d'armage du ressort de barillet n'est pas constant dans le temps.

### Résumé de l'invention

L'invention a au moins pour but de permettre qu'une réduction voire une suppression des frottements se produisant au niveau du support d'un balancier d'un oscillateur mécanique soit obtenu sans que l'exactitude d'un mouvement d'horlogerie fonctionnant à l'aide de cet oscillateur mécanique soit trop affecté par le degré d'armage de l'organe moteur.

Selon l'invention, ce but est atteint grâce à un mécanisme de réglage selon la revendication 1, 7, 14 ou 16. Ce mécanisme de réglage est plus précisément un mécanisme de réglage d'une vitesse moyenne dans un mouvement d'horlogerie et comprend une roue d'échappement et un oscillateur mécanique. Cet oscillateur mécanique comprend un balancier et plusieurs lames élastiquement flexibles qui sont élastiquement flexibles dans un plan d'oscillation et qui portent et rappellent le balancier de manière que ce balancier soit oscillant angulairement dans le plan d'oscillation. Le mécanisme de réglage comporte une ancre comprenant deux palettes rigides qui sont rigidement solidaires du balancier et agencées pour coopérer alternativement avec une denture de la roue d'échappement lorsque le balancier oscille angulairement.

Pendant le fonctionnement, le couple moteur d'entraînement de la roue d'échappement n'interfère pas ou pratiquement pas dans les oscillations du balancier, sauf lors des phases d'impulsion. On a constaté que cela rend l'exactitude du comptage du temps moins dépendante du degré d'armage de l'organe moteur.

Par ailleurs, les lames élastiquement flexibles peuvent aisément être agencées pour que les oscillations du balancier aient une amplitude compatible avec l'utilisation d'un échappement dont l'ancre comprend deux palettes rigides et rigidement solidaires du balancier.

Le mécanisme de réglage défini ci-dessus peut incorporer une ou plusieurs autres caractéristiques avantageuses, isolément ou en combinaison, en particulier parmi celles précisées ci-après.

Selon la revendication 1, chaque palette comporte un côté amont formant une surface de repos pour bloquer successivement des dents de la denture vers l'aval à l'encontre d'un couple moteur d'entraînement de la roue d'échappement, chaque palette comportant une surface terminale formant une surface d'impulsion pour recevoir successivement des impulsions de la part de la denture.

Avantageusement, chaque surface de repos se recourbe vers l'autre surface de repos. Lorsque tel est le cas, l'exactitude du comptage du temps est le plus souvent encore moins dépendante du degré d'armage de l'organe moteur.

Avantageusement, chaque surface de repos se recourbe vers l'autre surface de repos de manière à pouvoir glisser sur une dent de la denture, lors d'une oscillation angulaire du balancier, en ne provoquant pas ou sensiblement pas de mouvement de rotation de la roue d'échappement. Lorsque tel est le cas, l'exactitude du comptage du temps est encore moins dépendante du degré d'armage de l'organe moteur.

Avantageusement, chaque surface de repos possède une courbure sensiblement constante dans le sens de sa longueur et a un centre de courbure sensiblement positionné toujours au même endroit, sensiblement sur un axe de pivotement virtuel du balancier. Lorsque tel est le cas, l'exactitude du comptage du temps est encore moins dépendante du degré d'armage de l'organe moteur.

Avantageusement, l'oscillateur mécanique comprend une embase de montage.

Avantageusement, au moins une partie des lames élastiquement flexibles comportent chacune une extrémité rigidement unie à l'embase de montage. Avantageusement, au moins une partie des lames élastiquement flexibles comportent chacune une extrémité rigidement unie au balancier.

Selon la revendication 7, l'oscillateur mécanique comprend une embase de montage, tandis qu'au moins une première et une deuxième lame élastiquement flexible parmi les lames élastiquement flexibles comportent chacune deux extrémités opposées, à savoir une première extrémité rigidement unie à l'embase de montage et une deuxième extrémité, au moins une troisième et une quatrième lame élastiquement flexible parmi les lames élastiquement flexibles comportant chacune deux extrémités opposées, à savoir une première extrémité rigidement unie au balancier et une deuxième extrémité, et que les deuxièmes extrémités des première, deuxième, troisième et quatrième lames élastiquement flexibles au moins sont rigidement unies les unes aux autres.

On a trouvé que, lorsqu'on est dans le cas défini au paragraphe précédent, le couple de rappel que les première, deuxième, troisième et quatrième lames élastiquement flexibles exercent ensemble sur le balancier est globalement proportionnel au déplacement angulaire du balancier à partir d'une position de point mort et que cela contribue à un bon isochronisme de l'oscillateur mécanique. Toujours lorsqu'on est dans le cas défini au paragraphe précédent, il est aisé d'obtenir que les oscillations du balancier aient une amplitude compatible avec l'utilisation d'un échappement à repos frottant.

Avantageusement, les deuxièmes extrémités des première, deuxième, troisième et quatrième lames élastiquement flexibles sont rigidement unies les unes aux autres par une partie d'accouplement.

Avantageusement, les premières extrémités des première et deuxième lames élastiquement flexibles sont décalées angulairement l'une de l'autre d'un angle compris entre 80° et 150°, autour d'un axe perpendiculaire au plan d'oscillation et centré sur la partie d'accouplement, les premières extrémités des troisième et quatrième lames élastiquement flexibles étant décalées angulairement l'une de l'autre d'un angle compris entre 80° et 150°, autour de l'axe perpendiculaire au plan d'oscillation et centré sur la partie d'accouplement.

Lorsqu'il en est ainsi, les oscillations angulaires du balancier dans le plan d'oscillation, autour d'un axe de pivotement virtuel, sont favorisées alors que sont défavorisés les autres modes vibratoires, c'est-à-dire les modes vibratoires parasites.

Avantageusement, les premières extrémités des première et deuxième lames élastiquement flexibles sont décalées angulairement l'une de l'autre d'un angle de l'ordre de 120°, autour de l'axe perpendiculaire au plan d'oscillation et centré sur la partie d'accouplement, les premières extrémités des troisième et quatrième lames élastiquement flexibles étant décalées angulairement l'une de l'autre d'un angle de l'ordre de 120°, autour de l'axe perpendiculaire au plan d'oscillation et centré sur la partie d'accouplement.

Lorsqu'il en est ainsi, les oscillations angulaires du balancier dans le plan d'oscillation, autour d'un axe de pivotement virtuel, sont favorisées alors que sont défavorisés les autres modes vibratoires, c'est-à-dire les modes vibratoires parasites.

Selon la revendication 16, l'oscillateur mécanique comprend une embase de montage, tandis qu'au moins une partie de l'embase de montage, au moins une partie du balancier et les lames élastiquement flexibles font partie d'une même pièce d'un seul tenant. Lorsque tel est le cas, une solution compacte peut être obtenue. Elle peut l'être à un coût réduit dans la mesure où les lames élastiquement flexibles, au moins une partie de l'embase de montage et au moins une partie du balancier peuvent être réalisées en même temps avec le ou les mêmes appareils. En outre, une réduction des composants à assembler peut également être obtenue. De plus, une précision accrue peut être obtenue quant à la géométrie de l'ensemble, en particulier lorsque la pièce d'un seul tenant est réalisée au moyen du procédé DRIE ou du procédé LiGA.

Avantageusement, au moins une partie de l'embase de montage, au moins une partie du balancier et les lames élastiquement flexibles sont réalisées en silicium et/ou en oxyde de silicium.

Avantageusement, les deuxièmes extrémités des première, deuxième, troisième et quatrième lames élastiquement flexibles sont rigidement unies les unes aux autres par une partie d'accouplement par où passe un axe de pivotement virtuel du balancier.

Avantageusement, la partie d'accouplement se trouve sensiblement à égale distance des premières extrémités des première, deuxième, troisième et quatrième lames élastiquement flexibles.

Avantageusement, le balancier possède un centre de gravité se trouvant sensiblement à la partie d'accouplement.

Avantageusement, les première et deuxième lames élastiquement flexibles sont sensiblement symétriques entre elles par rapport à un plan. Avantageusement, les troisième et quatrième lames élastiquement flexibles sont sensiblement symétriques entre elles par rapport à ce plan.

Avantageusement, les première et troisième lames élastiquement flexibles s'étendent dans un même plan perpendiculaire au plan d'oscillation. Avantageusement, les deuxième et quatrième lames élastiquement flexibles s'étendent dans un même plan perpendiculaire au plan d'oscillation.

Avantageusement, l'embase de montage comporte deux butées qui sont des butées de fin de course pour le balancier et qui définissent une course angulaire maximale du balancier en empêchant ce balancier d'aller au-delà de deux extrémités opposées de cette course angulaire maximale. Lorsque tel est le cas, les deux lames élastiquement flexibles sont protégées contre une détérioration résultant d'une déformation trop importante, telle qu'une déformation consécutive à un choc.

Selon la revendication 14, le balancier comporte deux ailes opposées et une traverse reliant ces deux ailes entre elles, au moins une partie des lames élastiquement flexibles comportant chacune une extrémité rigidement unie à ladite traverse. Lorsque tel est le cas, l'embase de montage ou un équivalent de celle-ci peut ne pas être entourée par le balancier, ce qui offre une plus grande liberté de conception.

L'invention a encore pour objet un mouvement d'horlogerie, comprenant un organe moteur, un rouage entraîné par l'organe moteur, et un mécanisme de réglage tel que défini précédemment, la roue d'échappement étant entraînée par le rouage.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est une vue schématique d'un mouvement d'horlogerie selon un mode de réalisation de l'invention,
- la figure 2 est une vue en plan d'un mécanisme de réglage dans lequel un échappement et un oscillateur mécanique selon un mode de réalisation de l'invention sont associés de manière à pouvoir interagir pour régler les vitesses de rotation moyennes au sein d'un rouage de finissage du mouvement d'horlogerie de la figure 1,
- la figure 3 est une vue en plan sur laquelle l'oscillateur mécanique du mécanisme de réglage de la figure 2 est représenté seul, sans l'échappement,
- la figure 4 est une vue en perspective représentant le même oscillateur mécanique que la figure 3, ainsi qu'une ancre qui est fixée à un balancier de cet oscillateur mécanique et qui fait partie de l'échappement visible à la figure 2,
- la figure 5 est un agrandissement d'une vue partielle extraite d'une vue en plan représentant le même sous-ensemble résultant de l'association d'un oscillateur mécanique et d'une ancre que la figure 4, et
- les figures 6 à 9 représentent le même mécanisme de réglage que la figure 2 et montrent des positions successives que le balancier de l'oscillateur mécanique, l'ancre et une roue d'échappement occupent au cours de l'un de plusieurs cycles identiques se répétant en fonctionnement.

### Description d'un mode préférentiel de l'invention

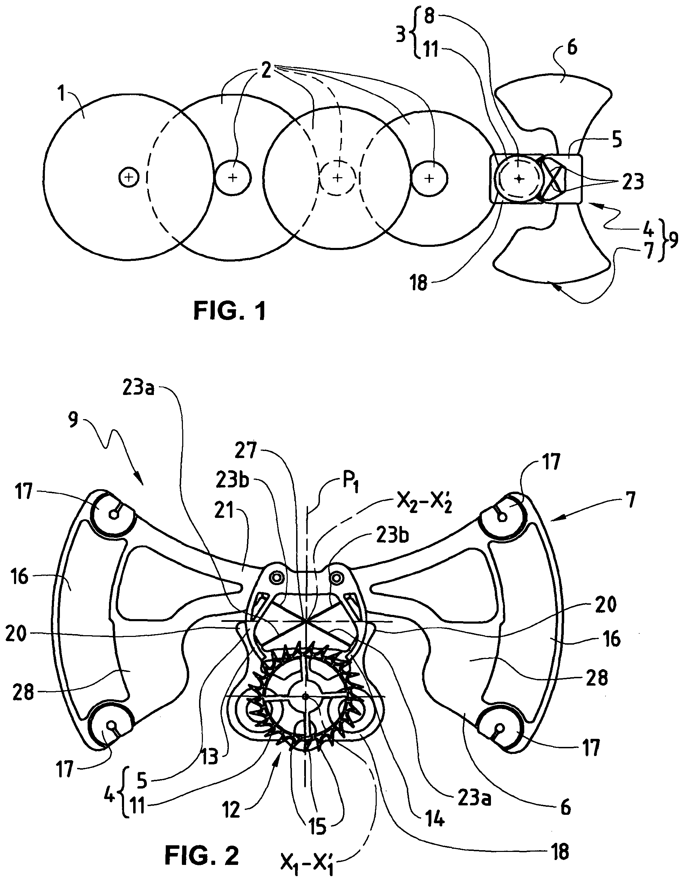

Sur la figure 1, un mouvement d'horlogerie selon un mode de réalisation de l'invention comporte un barillet 1, dont un organe moteur non représenté tel qu'un ressort spiral produit un couple moteur et qui, du fait de ce couple moteur, entraîne un rouage de finissage 2. Ce rouage de finissage 2 entraîne à son tour un mobile d'échappement 3, qui fait partie d'un échappement 4 comprenant en outre une ancre 5. Cette ancre 5 est portée par le balancier 6 d'un oscillateur mécanique 7.

Une platine non représentée ou un châssis d'un autre type porte le barillet 1, le mobile d'échappement 3, l'oscillateur mécanique 7 et le rouage de finissage 2, dont les mobiles peuvent être maintenus en place d'une manière connue en soi, par des ponts également non représentés. Le mobile d'échappement 3 comporte un pignon 8, qui engrène avec une roue du rouage de finissage 2.

Sur la figure 2, l'échappement 4 et l'oscillateur mécanique 7 sont associés de manière à former ensemble un mécanisme 9 de réglage d'une vitesse de rotation moyenne dans le mouvement d'horlogerie de la figure 1. L'échappement 4 est un échappement à repos frottant. Rotatif sur un axe de rotation X₁-X'₁, son mobile d'échappement 3 comporte, outre le pignon 8, une roue d'échappement 11 comprenant une denture 12 périphérique, qui est prévue pour coopérer alternativement avec une palette d'entrée 13 et une palette de sortie 14 de l'ancre 5.

La denture 12 est constituée d'une succession de dents triangulaires 15, dont chacune se termine par une extrémité libre sensiblement pointue.

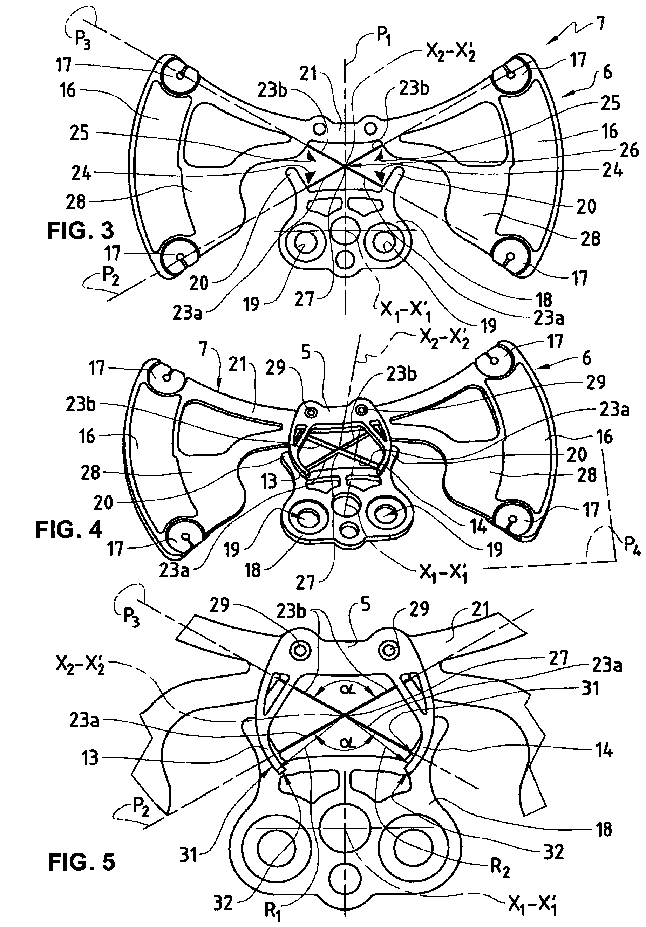

Ainsi qu'on peut le voir aux figures 3 et 4, l'oscillateur mécanique 7 est symétrique par rapport à un plan de symétrie P₁. Pour l'essentiel, c'est-à-dire si l'on excepte des masselottes 16 et 17 que portent son balancier 6, cet oscillateur mécanique 7 est aplati et s'étend dans un plan P₄ perpendiculaire au plan de symétrie P₁. Ce plan P₄ est le plan de la feuille à la figure 3.

L'oscillateur mécanique 7 comporte une embase fixe de montage 18, qui présente la forme d'une plaque et qui est destinée à être fixée rigidement à la platine du mouvement d'horlogerie, au moyen de vis non représentées ou d'autres organes de fixation. Des trous traversants 19 pour le passage de telles vis sont percés dans l'embase de montage 18, dans le sens de son épaisseur. Cette embase de montage 18 comporte deux doigts latéraux, qui forment des butées de fin de course angulaire 20 pour le balancier 6 et qui sont dirigés vers une traverse 21 de ce balancier 6.

Une articulation élastique constitutive de l'oscillateur mécanique 7 comprend une première lame élastiquement flexible 23a, une deuxième lame élastiquement flexible 23a, une troisième lame élastiquement flexible 23b, un quatrième lame élastiquement flexible 23b et une partie d'accouplement 27. Cette articulation élastique relie l'embase de montage 18 à la traverse 21. Elle porte le balancier 6 en étant elle-même portée par l'embase de montage 18. L'embase de montage 18, les lames élastiquement flexibles 23a et 23b, la partie d'accouplement 27 et le balancier 6 à l'exception des masselottes 16 et 17 font partie d'une pièce d'un seul tenant.

Les lames élastiquement flexibles 23a sont sensiblement symétriques l'une de l'autre par rapport au plan de symétrie P₁. Il en est de même des lames élastiquement flexibles 23b.

Chaque lame élastiquement flexible 23a comporte une première extrémité 24, au niveau de laquelle elle se raccorde rigidement sur l'embase de montage 18. En d'autres termes, chaque lame élastiquement flexible 23a est unie à l'embase de montage 18 par une liaison de type encastrement. Chaque lame élastiquement flexible 23b comporte une première extrémité 25, au niveau de laquelle elle se raccorde rigidement à la traverse 21. En d'autres termes, chaque lame élastiquement flexible 23b est unie à la traverse 21 par une liaison de type encastrement.

A l'opposé de sa première extrémité 24 ou 25, chacune des lames élastiquement flexibles 23a et 23b comporte une deuxième extrémité 26 et se raccorde sur la partie d'accouplement ridide 27 au niveau cette deuxième extrémité 26. Les deuxièmes extrémités 26 des lames élastiquement flexibles 23a et 23b sont rigidement unies entre elles.

Chacune des lames élastiquement flexibles 23a et 23b s'étend selon une surface réglée dont toutes les génératrices sont perpendiculaires au plan P₄ de l'oscillateur mécanique 7. Les lames 23a et 23b sont ainsi élastiquement flexibles dans le plan P₄ et elles autorisent des oscillations angulaires du balancier 6 dans ce plan P₄, autour d'un axe de pivotement virtuel X₂-X'₂. En plus d'être le plan de l'oscillateur mécanique 7, le plan P₄ est donc le plan d'oscillation du balancier 6.

Dans l'exemple représenté, chacune des lames élastiquement flexibles 23a et 23b est rectiligne, ce qui pourrait toutefois ne pas être le cas. La première lame élastiquement flexible 23a et la troisième lame élastiquement flexible 23b s'étendent dans le même plan P₂, ce qui pourrait ne pas être le cas. La deuxième lame élastiquement flexible 23a et la quatrième lame élastiquement flexible 23b s'étendent dans le même plan P₃, ce qui pourrait ne pas être le cas. Sécants au niveau de la partie d'accouplement 27, les plans P₂ et P₃ sont les surfaces réglées susmentionnées et sont perpendiculaires au plan P₄.

La partie d'accouplement 27 se trouve à distance des premières extrémités 24 et 25. De préférence, elle se trouve plus précisément à égale distance de ces premières extrémités 24 et 25. L'axe de pivotement virtuel X₂-X'₂ est centré sur la partie d'accouplement 27. Il demeure sensiblement dans le plan de symétrie P₁ lorsque le balancier 6 oscille.

Outre qu'elles supportent le balancier 6 de telle manière que celui-ci peut osciller angulairement autour de son axe de pivotement virtuel X₂-X'₂, les lames élastiquement flexibles 23a et 23b rappellent élastiquement ce balancier 6 vers une position de point mort, qui est celle que le balancier 6 occupe aux figures 2 à 5.

Sur la figure 5, l'angle α est l'angle entre les plans P₂ et P₃. Plus précisément, cet angle α est l'angle dont la première extrémité 24 de l'une des lames élastiquement flexible 23a et la première extrémité 24 de l'autre lame élastiquement flexible 23a sont décalées angulairement l'une de l'autre autour d'un axe qui se confond avec l'axe de pivotement virtuel X₂-X'₂ dans l'exemple représenté et qui est plus précisément l'axe perpendiculaire au plan P₄ et centré sur la partie d'accouplement 27. L'angle dont les premières extrémités 25 sont décalées angulairement l'une de l'autre pourrait ne pas avoir la même valeur que l'angle dont les premières extrémités 24 sont décalées angulairement l'une de l'autre. Dans l'exemple représenté, l'angle α est également l'angle dont les premières extrémités 25 des lames élastiquement flexibles 23b sont angulairement décalées l'une de l'autre autour l'axe perpendiculaire au plan P₄ et centré sur la partie d'accouplement 27. L'angle α est avantageusement compris entre 80° et 150°. De préférence, l'angle α est de l'ordre de 120°.

On a découvert que les angles α compris entre 80° et 150° sont parmi les angles les plus défavorables à l'apparition de modes vibratoires parasites, c'est-à-dire de modes vibratoires autres que celui dans lequel le balancier 6 oscille angulairement autour de son axe de pivotement virtuel X₂-X'₂, dans le plan d'oscillation P₄. On a découvert qu'un angle α de l'ordre de 120° donne les meilleurs résultats en termes de lutte contre l'apparition des modes vibratoires parasites susmentionnés.

Comme le balancier 6 est monté pivotant sans recourir à un arbre retenu et guidé par deux paliers, les frottements au niveau de tels paliers n'existent pas et les pertes dues aux frottements sont fortement réduites, si bien que l'oscillateur mécanique 7 possède un excellent facteur de qualité.

De plus, l'absence de frottement au niveau de paliers de retenue d'un arbre se traduit par une absence d'usure et par l'inutilité d'une lubrification.

L'absence de pivots et de paliers guidant ces pivots dans l'oscillateur mécanique 7 a encore un autre avantage. Cet autre avantage est que l'oscillateur mécanique 7 possède un fonctionnement peu sinon pas sensible à l'orientation de cet oscillateur mécanique 7 par rapport à la direction de la gravité. A l'inverse, lorsqu'un balancier est monté au moyen de deux pivots et de deux paliers guidant ces pivots, les frottements entre les pivots et les paliers sont fonction de l'orientation du balancier par rapport à la direction de la gravité.

Dans l'exemple représenté, les lames élastiquement flexibles 23a sont au nombre de deux. Selon une variante non représentée et ne sortant pas du cadre de l'invention, plus de deux lames élastiquement flexibles 23a pourraient relier l'embase de montage 18 à la partie d'accouplement 27.

Dans l'exemple représenté, les lames élastiquement flexibles 23b sont au nombre de deux. Selon une variante non représentée et ne sortant pas du cadre de l'invention, plus de deux lames élastiquement flexibles 23b pourraient relier la partie d'accouplement 27 au balancier 6.

De retour sur la figure 3, le balancier 6 comporte deux ailes 28 planes que la traverse 21 relie l'une à l'autre. Chaque aile 28 porte une masselotte 16 et deux masselottes 17. Ces masselottes 16 et 17 ont pour fonction d'augmenter l'inertie du balancier 6 par rapport à son axe de pivotement X₂-X'₂. Les masselottes 17 sont des anneaux fendus rapportés et sont répartis sur les quatre sommets d'un rectangle. Comme elles peuvent être pivotées sur elles-mêmes, ces masselottes 17 permettent de modifier l'inertie du balancier 6 et d'ajuster ainsi la fréquence de l'oscillateur mécanique 7.

Les masselottes 16 et 17 peuvent être réalisées ou non en un même matériau. Le reste du balancier 6 est réalisé en un matériau dont la masse volumique est inférieure à celle(s) du ou des matériaux constitutifs des masselottes 16 et 17. De la sorte, le ratio entre l'inertie du balancier 6 par rapport à son axe de pivotement X₂-X'₂ et le poids de ce balancier 6 est élevé, si bien que l'oscillateur mécanique 7 est peu sensible aux chocs tout en possédant un pouvoir réglant élevé.

De préférence, le barycentre du balancier 6 se trouve sensiblement sur l'axe de pivotement virtuel X₂-X'₂ et au niveau de la partie d'accouplement 27.

De retour sur la figure 5, la palette d'entrée 13 et la palette de sortie 14 sont l'une et l'autre rigides. Elles sont en outre rigidement solidaires du balancier 6, dans la mesure où l'ancre 5 est fixée rigidement à la traverse 21, au moyen de deux chevilles d'assemblage 29 dans l'exemple représenté.

Dans la présente description et dans les revendications annexées, les termes « aval » et « amont », ainsi que les termes analogues, se réfèrent au sens de progression d'une dent 15 au niveau des palettes 13 et 14.

Chaque palette 13 ou 14 comporte une surface de repos 31 destinée à stopper temporairement chaque dent 15 vers l'aval, ainsi qu'une surface d'impulsion 32 destinée à recevoir une impulsion de la part de chaque dent 15, c'est-à-dire une poussée par laquelle une énergie d'entretien des oscillations de l'oscillateur mécanique 7 est transférée de l'organe moteur du barillet 1 à l'oscillateur mécanique 7.

Chaque surface de repos 31 est formée par un côté amont d'une des palettes 13 et 14. Chaque surface de repos 31 est courbe dans le sens de sa longueur, de manière à se recourber vers l'autre surface de repos 31. Chaque surface de repos 31 possède un rayon de courbure constant ou sensiblement constant R₁ ou R₂, ainsi qu'un centre de courbure localisé de manière sensiblement fixe, sur l'axe de pivotement virtuel X₂-X'₂.

Chaque surface d'impulsion 32 est une surface terminale à l'extrémité d'une des palettes 13 et 14.

De préférence, l'embase de montage 18, les lames élastiquement flexibles 23a et 23b , ainsi que le balancier 6 à l'exception des masselottes 16 et 17 font partie d'une même pièce d'un seul tenant réalisée en un matériau monocristallin, notamment en un matériau monocristallin à base de silicium ou à base de quartz. Dans l'exemple représenté, cette pièce d'un seul tenant est de préférence majoritairement faite de silicium, auquel cas elle possède avantageusement une couche superficielle d'oxyde de silicium. Par exemple, l'oscillateur mécanique 7 à l'exception des masselottes 16 et 17 peut être découpée dans une tranche de silicium, encore appelée wafer, par gravure ionique réactive profonde, c'est-à-dire en mettant en oeuvre le procédé communément appelé « DRIE » (acronyme de « Deep Reactive Ion Etching »). On notera que les lames élastiquement flexibles 23a et 23b sont facilement réalisables au moyen de ce procédé DRIE.

Les masselottes 16 et 17 peuvent être métalliques. Dans l'exemple représenté, elles sont faites d'or. Les masselottes 16 peuvent être obtenues par croissance galvanique.

De préférence, l'ancre 5 est une pièce d'un seul tenant réalisée en un matériau monocristallin, notamment en un matériau monocristallin à base de silicium ou à base de quartz. Dans l'exemple représenté, l'ancre 5 est de préférence majoritairement faite de silicium, auquel cas elle possède avantageusement une couche superficielle d'oxyde de silicium. Par exemple, l'ancre 5 peut être découpée dans une tranche de silicium, encore appelée wafer, par gravure ionique réactive profonde, c'est-à-dire en mettant en oeuvre le procédé communément appelé « DRIE ». Au moins au niveau de leurs surfaces de repos 31 et de leurs surfaces d'impulsion 32, les palettes 13 et 14 sont avantageusement revêtues d'un revêtement ayant pour fonction de réduire le coefficient de frottement et d'augmenter la résistance à l'usure. Par exemple, ce revêtement peut être en diamant, notamment en diamant poly cristallin, ou en DLC (acronyme de Diamond-Like Carbon), c'est-à-dire en carbone sous forme de diamant amorphe, ou bien encore en grafène. Les dents 15 de la roue d'échappement 11 peuvent également être au moins localement revêtue d'un tel revêtement ayant pour fonction de réduire le coefficient de frottement et d'augmenter la résistance à l'usure.

De préférence, les deux chevilles d'assemblage 29 sont faites d'un alliage de titane, par exemple de l'alliage Ti6Al4V, et maintiennent assemblés deux éléments ayant une âme en silicium, à savoir la traverse 21 et l'ancre 5.

Sans sortir du cadre de l'invention, l'oscillateur mécanique 7 et/ou l'ancre 5 et/ou les deux chevilles d'assemblage 29 peuvent être réalisés en d'autres matériaux que ceux mentionnés ci-dessus. Par exemple, tout ou partie de l'oscillateur mécanique 7 et/ou de l'ancre 5 peut être réalisé à l'aide du procédé « LiGA » (acronyme de « Lithographie, Galvanoformung und Abformung »). Egalement, tout ou partie de l'oscillateur mécanique 7 et/ou de l'ancre 5 peut être découpé dans une plaque de métal, par laser.

Ainsi qu'on peut le voir à la figure 2, le mécanisme de réglage 9 possède une constitution particulièrement simple. En particulier, les mêmes moyens, à savoir les lames élastiquement flexibles 23a et 23b, rendent pivotant à la fois l'ancre 5 et le balancier 6. Ces moyens possèdent un fonctionnement qui ne produit pas ou pratiquement pas de frottements, ainsi que cela a déjà été mentionné précédemment. A titre de comparaison, un mécanisme de réglage résultant de l'association d'un échappement à ancre suisse et d'un oscillateur mécanique à balancier et spiral possède un fonctionnement dans lequel des frottements ont lieu au niveau des paliers guidant l'arbre de support de l'ancre et au niveau des paliers guidant l'arbre de support du balancier.

Le couple de rappel exercé par les lames élastiquement flexibles 23a et 23b est sensiblement proportionnel à l'angle dont le balancier 6 est pivoté à partir de sa position de point mort, autour de l'axe de pivotement virtuel X₂-X'₂. Cela contribue à conférer un bon isochronisme à l'oscillateur mécanique 7.

De plus, lorsque le balancier 6 oscille, son centre de gravité reste dans le plan de symétrie P₁, c'est-à-dire ne s'écarte pas ou pratiquement pas de ce plan de symétrie P₁ d'un côté puis de l'autre. Cela contribue également aux bonnes performances de l'oscillateur mécanique 7 en termes d'isochronisme.

A titre de comparaison, dans l'oscillateur décrit dans la demande de brevet suisse CH 709 291 susmentionnée, l'axe de pivotement oscille angulairement lors du fonctionnement et le centre de gravité du balancier fait de même en ayant l'effet d'un balourd.

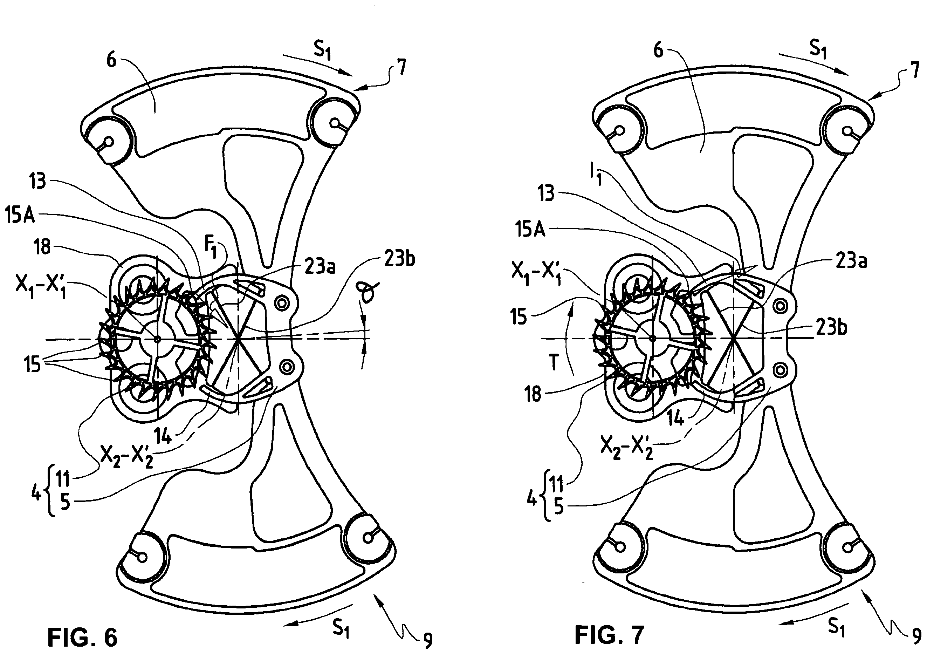

Les figures 6 à 9 illustrent chacune l'un de plusieurs états dans lesquels le mécanisme de réglage 9 se trouve successivement au cours de son fonctionnement. En fonctionnement, l'amplitude angulaire des oscillations du balancier 6 est de préférence de l'ordre de 6 degrés, ce qui est le cas dans l'exemple représenté. Cette amplitude angulaire est compatible avec l'utilisation d'un échappement à repos frottant tel que l'échappement 4. De préférence, l'oscillateur mécanique 7 est dimensionné pour osciller à une fréquence de l'ordre de 25 Hz, ce qui est le cas dans l'exemple représenté. D'autres amplitudes angulaires et d'autres fréquences d'oscillation peuvent également être employées sans sortir du cadre de l'invention.

Sur la figure 6, le balancier 6 est décalé angulairement d'un angle θ, autour de son axe de pivotement virtuel X₂-X'₂, par rapport à sa position de point mort. Il pivote dans le sens S₁, vers sa position de point mort, sous l'effet du rappel exercé par les lames élastiquement flexibles 23a et 23b. La palette d'entrée 13 retient une dent 15A de la denture 12 et, ce faisant, bloque la roue d'échappement 11 à l'encontre du couple moteur en provenance du barillet 1.

Toujours sur la figure 6, la surface de repos 31 de la palette d'entrée 13 glisse sur la dent 15A. Grâce à la courbure de cette surface de repos 31, la direction de la force F₁ appliquée par la dent 15A sur la palette d'entrée 13 passe sensiblement par l'axe de pivotement virtuel X₂-X'₂. Cette force F₁ n'intervient donc pas ou que faiblement dans l'oscillation du balancier 6, et ce quelle que soit son intensité qui décroît à mesure que se désarme le ressort du barillet 1. Cela contribue à un bon isochronisme de l'oscillateur mécanique 7. S'agissant de la courbure de la surface de repos 31 de la palette d'entrée 13, on remarquera que, lorsque cette surface de repos 31 glisse dans un sens puis dans l'autre sur la dent 15A, cette dent 15A reste immobile ou pratiquement immobile, c'est-à-dire ne se déplace pas ou pratiquement pas vers l'amont, dans le sens d'un recul, ou vers l'aval, dans le sens d'une avance.

L'état illustré à la figure 7 suit celui illustré à la figure 6. Sur cette figure 7, la dent 15A est libérée et la roue d'échappement 11 tourne sur elle-même sous l'action du couple moteur en provenance du barillet 1, ce qu'indique la flèche T. La dent 15A applique une impulsion I₁ sur la surface d'impulsion 32 de la palette d'entrée 13. Cette impulsion I₁ s'exerce dans le sens S₁, c'est-à-dire dans le sens dans lequel le pivotement du balancier 6 a alors lieu autour de l'axe de pivotement virtuel X₂-X'₂.

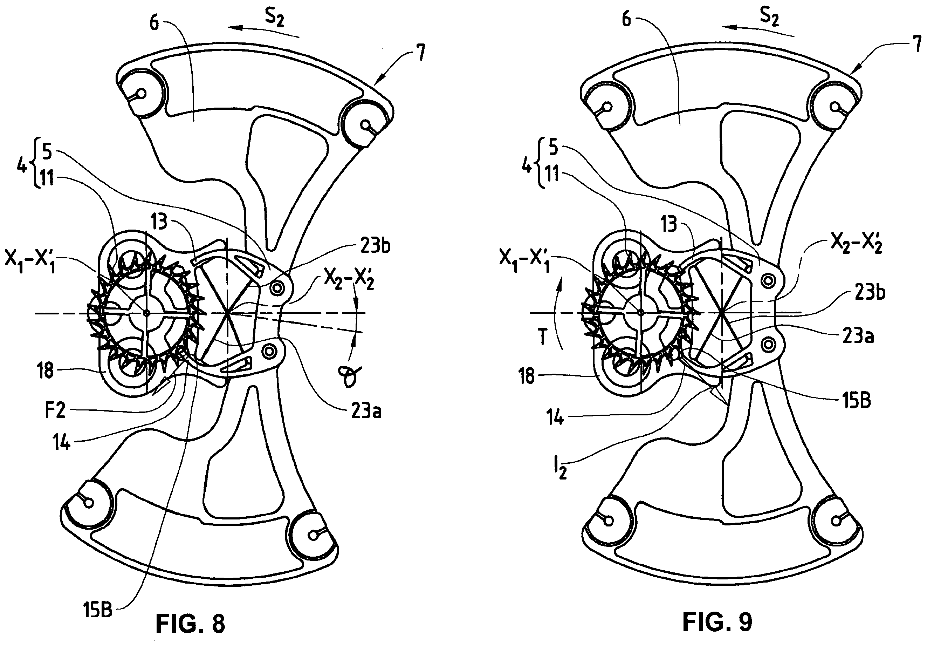

Le pivotement du balancier 6 autour de l'axe de pivotement virtuel X₂-X'₂ continue dans le sens S₁ puis s'inverse, après quoi le mécanisme de réglage 9 est tel qu'illustré à la figure 8.

Sur cette figure 8, le balancier 6 est décalé angulairement d'un angle θ, autour de son axe de pivotement virtuel X₂-X'₂, par rapport à sa position de point mort. Il pivote dans le sens S₂, vers sa position de point mort, sous l'effet du rappel exercé par les lames élastiquement flexibles 23a et 23b. La palette de sortie 14 retient une dent 15B de la denture 12 et, ce faisant, bloque la roue d'échappement 11 à l'encontre du couple moteur en provenance du barillet 1.

Toujours sur la figure 8, la surface de repos 31 de la palette de sortie 14 glisse sur la dent 15B. Grâce à la courbure de cette surface de repos 31, la direction de la force F₂ appliquée par la dent 15B sur la palette de sortie 14 passe sensiblement par l'axe de pivotement virtuel X₂-X'₂. Cette force F₂ n'intervient donc pas ou que faiblement dans l'oscillation du balancier 6, et ce quel que soit son intensité qui décroît à mesure que se désarme le ressort du barillet 1. Cela contribue à un bon isochronisme de l'oscillateur mécanique 7. S'agissant de la courbure de la surface de repos 31 de la palette de sortie 14, on remarquera que, lorsque cette surface de repos 31 glisse dans un sens puis dans l'autre sur la dent 15B, cette dent 15B reste immobile ou pratiquement immobile, c'est-à-dire ne se déplace pas ou pratiquement pas vers l'amont, dans le sens d'un recul, ou vers l'aval, dans le sens d'une avance.

L'état illustré à la figure 9 suit celui illustré à la figure 8. Sur cette figure 9, la dent 15B est libérée et la roue d'échappement 11 tourne sur elle-même sous l'action du couple moteur en provenance du barillet 1, ce qu'indique la flèche T. La dent 15B applique une impulsion I₂ sur la surface d'impulsion 32 de la palette de sortie 14. Cette impulsion I₂ s'exerce dans le sens S₂, c'est-à-dire dans le sens dans lequel le pivotement du balancier 6 a alors lieu autour de l'axe de pivotement virtuel X₂-X'₂.

On remarquera que, pendant le fonctionnement, le couple moteur en provenance du barillet 1 n'interfère pas ou pratiquement pas dans les oscillations du balancier 6, sauf lors des phases d'impulsion, c'est-à-dire durant les phases durant lesquelles sont appliquées les impulsions I₁ et I₂.

A titre de comparaison, la situation est très différente dans le mouvement d'horlogerie proposé dans la demande de brevet européen EP 1 736 838 susmentionnée. En effet, on a trouvé que, dans ce mouvement d'horlogerie, le balancier est accouplé en permanence avec le ressort de barillet. En d'autres termes, le couple de rappel s'exerçant sur le balancier est composé du couple de rappel produit par les lames élastiques supportant ce balancier et d'un couple produit par le ressort de barillet. De ce fait, dans le mouvement d'horlogerie proposé dans la demande de brevet européen EP 1 736 838 susmentionnée, la fréquence d'oscillation du balancier dépend dans une large mesure du degré d'armage du ressort de barillet fournissant le couple moteur d'entraînement de la roue d'échappement. Cela nuit à l'exactitude du comptage du temps dès lors que le degré d'armage du ressort de barillet n'est pas constant dans le temps.

L'invention ne se limite pas au mode de réalisation décrit précédemment et d'autres agencements produisant un pivot virtuel peuvent être employés. En particulier, les lames élastiquement flexibles 23a et 23b peuvent être disposées différemment l'une par rapport à l'autre, sans sortir du cadre de l'invention. Par exemple, elles peuvent être agencées comme dans la demande de brevet suisse CH 709 291 susmentionnée, même si l'agencement représenté à la figure 3 est avantageux pour au moins certaines des raisons mentionnées précédemment. Toujours sans sortir du cadre de l'invention, les deux lames élastiquement flexibles peuvent ne pas se croiser, tout en étant inclinées l'une par rapport à l'autre de sorte que, si ces deux lames élastiquement flexibles s'étendent chacune dans l'un de deux plans, ces deux plans se coupent, par exemple, au niveau du balancier ou de l'embase de montage.

De plus, un mécanisme de réglage d'une vitesse moyenne selon l'invention peut intallé dans un tourbillon.

L'invention peut être mise en oeuvre dans diverses pièces d'horlogerie. Comme elle peut posséder un faible encombrement, l'invention peut notamment être mise en oeuvre dans une montre telle qu'une montre-bracelet.

## Revendications

1. Mécanisme de réglage d'une vitesse moyenne dans un mouvement d'horlogerie, comprenant une roue d'échappement (4) et un oscillateur mécanique (7), cet oscillateur mécanique (7) comprenant un balancier (6) et plusieurs lames élastiquement flexibles (23a, 23b) qui sont élastiquement flexibles dans un plan d'oscillation (P₄) et qui portent et rappellent le balancier (6) de manière que ce balancier (6) soit oscillant angulairement dans le plan d'oscillation (P₄),
**caractérisé en ce qu'**il comporte une ancre (5) comprenant deux palettes rigides (13, 14) qui sont rigidement solidaires du balancier (6) et agencées pour coopérer alternativement avec une denture (12) de la roue d'échappement (11) lorsque le balancier (6) oscille angulairement, et **en ce que** chaque palette (13, 14) comporte un côté amont formant une surface de repos (31) pour bloquer successivement des dents (15) de la denture (12) vers l'aval à l'encontre d'un couple moteur d'entraînement de la roue d'échappement (11), chaque palette (13, 14) comportant une surface terminale formant une surface d'impulsion (32) pour recevoir successivement des impulsions de la part de la denture (12).

2. Mécanisme de réglage selon la revendication 1, **caractérisé en ce que** chaque surface de repos (31) se recourbe vers l'autre surface de repos (31).

3. Mécanisme de réglage selon la revendication 2, **caractérisé en ce que** chaque surface de repos (31) se recourbe vers l'autre surface de repos (31) de manière à pouvoir glisser sur une dent (15) de la denture (12), lors d'une oscillation angulaire du balancier (6), en ne provoquant pas ou sensiblement pas de mouvement de rotation de la roue d'échappement (11).

4. Mécanisme de réglage selon l'une quelconque des revendications 2 et 3, **caractérisé en ce que** chaque surface de repos (31) possède une courbure sensiblement constante dans le sens de sa longueur et a un centre de courbure sensiblement positionné toujours au même endroit, sensiblement sur un axe de pivotement virtuel (X₂-X'₂) du balancier (6).

5. Mécanisme de réglage selon l'une quelconque des revendications précédentes, **caractérisé en ce que** l'oscillateur mécanique (7) comprend une embase de montage (18), au moins une partie des lames élastiquement flexibles (23a, 23b) comportant chacune une extrémité (24) rigidement unie à l'embase de montage (18), au moins une partie des lames élastiquement flexibles (23a, 23b) comportant chacune une extrémité (25) rigidement unie au balancier (6).

6. Mécanisme de réglage selon l'une quelconque des revendications précédentes, **caractérisé en ce que** l'oscillateur mécanique (7) comprend une embase de montage (18), au moins une première et une deuxième lame élastiquement flexible (23a) parmi les lames élastiquement flexibles comportant chacune deux extrémités opposées, à savoir une première extrémité (24) rigidement unie à l'embase de montage (18) et une deuxième extrémité (26), au moins une troisième et une quatrième lame élastiquement flexible (23b) parmi les lames élastiquement flexibles comportant chacune deux extrémités opposées, à savoir une première extrémité (25) rigidement unie au balancier (6) et une deuxième extrémité (26), et **en ce que** les deuxièmes extrémités (26) des première, deuxième, troisième et quatrième lames élastiquement flexibles (23a, 23b) au moins sont rigidement unies les unes aux autres.

7. Mécanisme de réglage d'une vitesse moyenne dans un mouvement d'horlogerie, comprenant une roue d'échappement (4) et un oscillateur mécanique (7), cet oscillateur mécanique (7) comprenant un balancier (6) et plusieurs lames élastiquement flexibles (23a, 23b) qui sont élastiquement flexibles dans un plan d'oscillation (P4) et qui portent et rappellent le balancier (6) de manière que ce balancier (6) soit oscillant angulairement dans le plan d'oscillation (P4),
**caractérisé en ce qu'**il comporte une ancre (5) comprenant deux palettes rigides (13, 14) qui sont rigidement solidaires du balancier (6) et agencées pour coopérer alternativement avec une denture (12) de la roue d'échappement (11) lorsque le balancier (6) oscille angulairement, **en ce que** l'oscillateur mécanique (7) comprend une embase de montage (18), au moins une première et une deuxième lame élastiquement flexible (23a) parmi les lames élastiquement flexibles comportant chacune deux extrémités opposées, à savoir une première extrémité (24) rigidement unie à l'embase de montage (18) et une deuxième extrémité (26), au moins une troisième et une quatrième lame élastiquement flexible (23b) parmi les lames élastiquement flexibles comportant chacune deux extrémités opposées, à savoir une première extrémité (25) rigidement unie au balancier (6) et une deuxième extrémité (26), et **en ce que** les deuxièmes extrémités (26) des première, deuxième, troisième et quatrième lames élastiquement flexibles (23a, 23b) au moins sont rigidement unies les unes aux autres.

8. Mécanisme de réglage selon la revendication 6 ou 7, **caractérisé en ce que** les deuxièmes extrémités (26) des première, deuxième, troisième et quatrième lames élastiquement flexibles (23a, 23b) sont rigidement unies les unes aux autres par une partie d'accouplement (27), les premières extrémités (24) des première et deuxième lames élastiquement flexibles (23a) étant décalées angulairement l'une de l'autre d'un angle (α) compris entre 80° et 150°, autour d'un axe perpendiculaire au plan d'oscillation (P₄) et centré sur la partie d'accouplement (27), les premières extrémités (25) des troisième et quatrième lames élastiquement flexibles (23b) étant décalées angulairement l'une de l'autre d'un angle (α) compris entre 80° et 150°, autour de l'axe perpendiculaire au plan d'oscillation (P₄) et centré sur la partie d'accouplement (27).

9. Mécanisme de réglage selon la revendication 8, **caractérisé en ce que** les premières extrémités (24) des première et deuxième lames élastiquement flexibles (23a) sont décalées angulairement l'une de l'autre d'un angle (α) de l'ordre de 120°, autour de l'axe perpendiculaire au plan d'oscillation (P₄) et centré sur la partie d'accouplement (27), les premières extrémités (25) des troisième et quatrième lames élastiquement flexibles (23b) étant décalées angulairement l'une de l'autre d'un angle de l'ordre de 120°, autour de l'axe perpendiculaire au plan d'oscillation (P₄) et centré sur la partie d'accouplement (27).

10. Mécanisme de réglage selon l'une quelconque des revendications 6 à 9, **caractérisé en ce que** les deuxièmes extrémités (26) des première, deuxième, troisième et quatrième lames élastiquement flexibles (23a, 23b) sont rigidement unies les unes aux autres par une partie d'accouplement (27) par où passe un axe de pivotement virtuel (X₂-X'₂) du balancier (6),

11. Mécanisme de réglage selon l'une quelconque des revendications 6 à 10, **caractérisé en ce que** les deuxièmes extrémités (26) des première, deuxième, troisième et quatrième lames élastiquement flexibles (23a, 23b) sont rigidement unies les unes aux autres par une partie d'accouplement (27), le balancier (6) possédant un centre de gravité se trouvant sensiblement à la partie d'accouplement (27).

12. Mécanisme de réglage selon l'une quelconque des revendications précédentes, **caractérisé en ce que** l'oscillateur mécanique (7) comprend une embase de montage (18) comportant deux butées (20) qui sont des butées de fin de course pour le balancier (6) et qui définissent une course angulaire maximale du balancier (6) en empêchant ce balancier (6) d'aller au-delà de deux extrémités opposées de cette course angulaire maximale.

13. Mécanisme de réglage selon l'une quelconque des revendications précédentes, **caractérisé en ce que** le balancier (6) comporte deux ailes opposées (28) et une traverse (21) reliant ces deux ailes (28) entre elles, au moins une partie des lames élastiquement flexibles (23a, 23b) comportant chacune une extrémité (25) rigidement unie à ladite traverse (21).

14. Mécanisme de réglage d'une vitesse moyenne dans un mouvement d'horlogerie, comprenant une roue d'échappement (4) et un oscillateur mécanique (7), cet oscillateur mécanique (7) comprenant un balancier (6) et plusieurs lames élastiquement flexibles (23a, 23b) qui sont élastiquement flexibles dans un plan d'oscillation (P4) et qui portent et rappellent le balancier (6) de manière que ce balancier (6) soit oscillant angulairement dans le plan d'oscillation (P4),
**caractérisé en ce qu'**il comporte une ancre (5) comprenant deux palettes rigides (13, 14) qui sont rigidement solidaires du balancier (6) et agencées pour coopérer alternativement avec une denture (12) de la roue d'échappement (11) lorsque le balancier (6) oscille angulairement, et **en ce que** le balancier (6) comporte deux ailes opposées (28) et une traverse (21) reliant ces deux ailes (28) entre elles, au moins une partie des lames élastiquement flexibles (23a, 23b) comportant chacune une extrémité (25) rigidement unie à ladite traverse (21).

15. Mécanisme de réglage selon l'une quelconque des revendications précédentes, **caractérisé en ce que** l'oscillateur mécanique (7) comprend une embase de montage (18), au moins une partie de l'embase de montage (18), au moins une partie du balancier (6) et les lames élastiquement flexibles (23a, 23b) faisant partie d'une même pièce d'un seul tenant,

16. Mécanisme de réglage d'une vitesse moyenne dans un mouvement d'horlogerie, comprenant une roue d'échappement (4) et un oscillateur mécanique (7), cet oscillateur mécanique (7) comprenant un balancier (6) et plusieurs lames élastiquement flexibles (23a, 23b) qui sont élastiquement flexibles dans un plan d'oscillation (P4) et qui portent et rappellent le balancier (6) de manière que ce balancier (6) soit oscillant angulairement dans le plan d'oscillation (P4),
**caractérisé en ce qu'**il comporte une ancre (5) comprenant deux palettes rigides (13, 14) qui sont rigidement solidaires du balancier (6) et agencées pour coopérer alternativement avec une denture (12) de la roue d'échappement (11) lorsque le balancier (6) oscille angulairement, et **en ce que** l'oscillateur mécanique (7) comprend une embase de montage (18), au moins une partie de l'embase de montage (18), au moins une partie du balancier (6) et les lames élastiquement flexibles (23a, 23b) faisant partie d'une même pièce d'un seul tenant.

17. Mouvement d'horlogerie, comprenant un organe moteur (1), un rouage (2) entraîné par l'organe moteur, **caractérisé en ce qu'**il comprend un mécanisme de réglage (9) selon l'une quelconque des revendications précédentes, la roue d'échappement (11) étant entraînée par le rouage (2).

## Patentansprüche

1. Mechanismus zur Einstellung einer mittleren Geschwindigkeit in einem Uhrwerk, umfassend ein Hemmungsrad (4) und einen mechanischen Oszillator (7), wobei der mechanische Oszillator (7) eine Unruh (6) und eine Vielzahl von elastisch flexiblen Klingen (23a, 23b) umfasst, welche elastisch flexibel in einer Schwingebene (P₄) sind, und welche die Unruh (6) tragen und rückführen, so dass die Unruh (6) in einem Winkel in der Schwingebene (P₄) schwingt,
**dadurch gekennzeichnet, dass** er einen Anker (5) aufweist, welcher zwei starre Paletten (13, 14) umfasst, die starr mit der Unruh (6) verbunden und eingerichtet sind, um wechselweise mit einer Zahnung (12) des Hemmungsrads (11) zu kooperieren, wenn die Unruh (6) in einem Winkel schwingt, und wobei jede Palette (13, 14) eine vorgelagerte Seite aufweist, welche eine Ruhefläche (31) bildet, um sukzessive die Zähne (15) der Zahnung (12) in nachgelagerter Richtung entgegen eines Antriebmotormoments des Hemmungsrads (11) zu blockieren, wobei jede Palette (13, 14) eine Endfläche aufweist, welche eine Impulsfläche (32) bildet, um sukzessive Impulse der Zahnung (12) aufzunehmen.

2. Einstellungsmechanismus nach Anspruch 1, **dadurch gekennzeichnet, dass** jede Ruhefläche (31) in Richtung der anderen Ruhefläche (31) gekrümmt ist.

3. Einstellungsmechanismus nach Anspruch 2, **dadurch gekennzeichnet, dass** jede Ruhefläche (31) in Richtung der anderen Ruhefläche (31) gekrümmt ist, um auf einem Zahn (15) der Zahnung (12), während einer Winkelschwingung der Unruh (6) gleiten zu können, wobei keine oder im Wesentlichen keine Drehbewegung des Hemmungsrads (11) verursacht wird.

4. Einstellungsmechanismus nach einem der Ansprüche 2 und 3, **dadurch gekennzeichnet, dass** jede Ruhefläche (31) eine im Wesentlichen konstante Krümmung in seiner Längsrichtung aufweist und ein Krümmungszentrum hat, welches im Wesentlichen immer an der gleichen Stelle positioniert ist, im Wesentlichen an einer virtuellen Drehachse (X₂-X'₂) der Unruh (6).

5. Einstellungsmechanismus nach einem der vorhergehenden Ansprüche, **dadurch gekennzeichnet, dass** der mechanische Oszillator (7) eine Befestigungsbasis (18) aufweist, wobei mindestens ein Teil der elastisch flexiblen Klingen (23a, 23b) jeweils ein Ende (24) umfassen, welches starr an der Befestigungsbasis (18) verbunden ist, wobei mindestens ein Teil der elastisch flexiblen Klingen (23a, 23b) je ein Ende (25) umfassen, welches starr an der Unruh (6) verbunden ist.

6. Einstellungsmechanismus nach einem der vorhergehenden Ansprüche, **dadurch gekennzeichnet, dass** der mechanische Oszillator (7) eine Befestigungsbasis (18) umfasst, wobei mindestens eine erste und eine zweite elastisch flexible Klinge (23a) der elastisch flexiblen Klingen je zwei entgegengesetzte Enden aufweist, d.h. ein erstes Ende (24), welches starr an der Befestigungsbasis (18) verbunden ist und ein zweites Ende (26), wobei mindestens eine dritte und eine vierte elastisch flexible Klinge (23b) der elastisch flexiblen Klingen je zwei entgegengesetzte Enden aufweist, d.h. ein erstes Ende (25), welches starr mit der Unruh (6) verbunden ist und dass die zweiten Enden (26) der ersten, zweiten, dritten und vierten elastisch flexiblen Klingen (23a, 23b) mindestens starr miteinander verbunden sind.

7. Mechanismus zur Einstellung einer mittleren Geschwindigkeit in einem Uhrwerk, umfassend ein Hemmungsrad (4) und einen mechanischen Oszillator (7), wobei der mechanische Oszillator (7) eine Unruh (6) und eine Vielzahl von elastisch flexiblen Klingen (23a, 23b) umfasst, welche elastisch flexibel in einer Schwingebene (P₄) sind, und welche die Unruh (6) tragen und rückführen, so dass die Unruh (6) in einem Winkel in der Schwingebene (P₄) schwingt,
**dadurch gekennzeichnet, dass** er einen Anker (5) aufweist, welcher zwei starre Paletten (13, 14) umfasst, die starr mit der Unruh (6) verbunden und eingerichtet sind, um wechselweise mit einer Zahnung (12) des Hemmungsrads (11) zu kooperieren, wenn die Unruh (6) in einem Winkel schwingt, wobei der mechanische Oszillator (7) eine Befestigungsbasis (18) umfasst, mindestens eine erste und eine zweite elastisch flexible Klinge (23a) der elastisch flexiblen Klingen je zwei entgegengesetzte Enden aufweist, d.h. ein erstes Ende (24), welches starr an der Befestigungsbasis (18) verbunden ist und ein zweites Ende (26), mindestens eine dritte und eine vierte elastisch flexible Klinge (23b) der elastisch flexiblen Klingen je zwei entgegengesetzte Enden aufweist, d.h. ein erstes Ende (25), welches starr mit der Unruh (6) verbunden ist und wobei die zweiten Enden (26) der ersten, zweiten, dritten und vierten elastisch flexiblen Klingen (23a, 23b) zumindesten starr miteinander verbunden sind

8. Einstellungsmechanismus nach Anspruch 6 oder 7, **dadurch gekennzeichnet, dass** die zweiten Enden (26) der ersten, zweiten, dritten und vierten elastisch flexiblen Klingen (23a, 23b) starr miteinander durch ein Verbindungsstück (27) verbunden sind, wobei die ersten Enden (24) der ersten und zweiten elastisch flexiblen Klingen (23a) eines winkelig relativ zu dem anderen um einen Winkel (α) versetzt sind, welcher zwischen 80° und 150° liegt, bezogen auf eine Achse senkrecht zu der Oszillationsebene (P₄) und zentriert auf dem Verbindungsstück (27), wobei die ersten Enden (25) der dritten und vierten elastisch flexiblen Klingen (23b) eines winkelig relativ zu dem anderen um einen Winkel (α) versetzt sind, welcher zwischen 80° und 150° liegt, bezogen auf eine Achse senkrecht zu der Oszillationsebene (P₄) und zentriert auf dem Verbindungsstück (27).

9. Einstellungsmechanismus nach Anspruch 8, **dadurch gekennzeichnet, dass** die ersten Enden (24) der ersten und zweiten elastisch flexiblen Klingen (23a) eines relativ zu dem anderen um einen Winkel (α) von 120° versetzt sind, bezogen auf die Achse senkrecht zur Oszillationsebene (P₄) und zentriert auf das Verbindungsstück (27), wobei die ersten Enden (25) der dritten und vierten elastisch flexiblen Klingen (23b) eines winkelig relativ zu dem anderen um einen Winkel von 120° versetzt sind, bezogen auf die Achse senkrecht zur Oszillationsebene (P₄) und zentriert auf das Verbindungsstück (27).

10. Einstellungsmechanismus, nach einem der Ansprüche 6 bis 9, **dadurch gekennzeichnet, dass** die zweiten Enden (26) der ersten, zweiten, dritten und vierten elastisch flexiblen Klingen (23a, 23b) starr miteinander durch ein Verbindungsstück (27) verbunden sind, durch welches eine virtuelle Drehachse (X₂-X'₂) der Unruh (6) verläuft.

11. Einstellungsmechanismus nach einem der Ansprüche 6 bis 10, **dadurch gekennzeichnet, dass** die zweiten Enden (26) der ersten, zweiten, dritten und vierten elastisch flexiblen Klingen (23a, 23b) starr miteinander durch ein Verbindungsstück (27) verbunden sind, wobei die Unruh (6) einen Schwerpunkt aufweist, welcher im Wesentlichen in dem Verbindungsstück (27) lokalisiert ist.

12. Einstellungsmechanismus nach einem der vorhergehenden Ansprüche, **dadurch gekennzeichnet, dass** der mechanische Oszillator (7) eine Befestigungsbasis (18) umfasst, welche zwei Stoppelemente (20) aufweist, welche für die Unruh (6) Wegendanschläge sind und welche für die Unruh (6) eine maximale Winkelbahn dadurch definieren, dass die Unruh (6) daran gehindert wird, über die zwei entgegengesetzten Enden der maximalen Winkelbahn hinauszugehen.

13. Einstellungsmechanismus nach einem der vorhergehenden Ansprüche, **dadurch gekennzeichnet, dass** die Unruh (6) zwei entgegengesetzte Flügel (28) und ein Steg (21) umfasst, welcher die beiden Flügel (28) miteinander verbindet, wobei mindestens ein Teil der elastisch flexiblen Klingen (23a, 23b) je ein Ende (25) umfassen, welches starr mit dem Steg (21) verbunden ist.

14. Mechanismus zur Einstellung einer mittleren Geschwindigkeit in einem Uhrwerk, umfassend ein Hemmungsrad (4) und einen mechanischen Oszillator (7), wobei der mechanische Oszillator (7) eine Unruh (6) und eine Vielzahl von elastisch flexiblen Klingen (23a, 23b) umfasst, welche elastisch flexibel in einer Schwingebene (P₄) sind, und welche die Unruh (6) tragen und rückführen, so dass die Unruh (6) in einem Winkel in der Schwingebene (P₄) schwingt,
**dadurch gekennzeichnet, dass** er einen Anker (5) aufweist, welcher zwei starre Paletten (13, 14) umfasst, die starr mit der Unruh (6) verbunden und eingerichtet sind, um wechselweise mit einer Zahnung (12) des Hemmungsrads (11) zu kooperieren, wenn die Unruh (6) in einem Winkel schwingt und wobei die Unruh (6) zwei entgegengesetzte Flügel (28) und einen Steg (21) umfasst, welcher die beiden Flügel (28) miteinander verbindet, wobei mindestens ein Teil der elastisch flexiblen Klingen (23a, 23b) je ein Ende (25) umfassen, welches starr mit dem Steg (21) verbunden ist.

15. Einstellungsmechanismus nach einem der vorhergehenden Ansprüche, **dadurch gekennzeichnet, dass** der mechanische Oszillator (7) eine Befestigungsbasis (18) umfasst, wobei mindestens ein Teil der Befestigungsbasis (18), mindestens ein Teil der Unruh (6) und die elastisch flexiblen Klingen (23a, 23b) integral miteinander sind.

16. Mechanismus zur Einstellung einer mittleren Geschwindigkeit in einem Uhrwerk, umfassend ein Hemmungsrad (4) und einen mechanischen Oszillator (7), wobei der mechanische Oszillator (7) eine Unruh (6) und eine Vielzahl von elastisch flexiblen Klingen (23a, 23b) umfasst, welche elastisch flexibel in einer Schwingebene (P₄) sind, und welche die Unruh (6) tragen und rückführen, so dass die Unruh (6) in einem Winkel in der Schwingebene (P₄) schwingt,
**dadurch gekennzeichnet, dass** er einen Anker (5) aufweist, welcher zwei starre Paletten (13, 14) umfasst, die starr mit der Unruh (6) verbunden und eingerichtet sind, um wechselweise mit einer Zahnung (12) des Hemmungsrads (11) zu kooperieren, wenn die Unruh (6) in einem Winkel schwingt und wobei der mechanische Oszillator (7) eine Befestigungsbasis (18) umfasst, wobei mindestens ein Teil der Befestigungsbasis (18), mindestens ein Teil der Unruh (6) und die elastisch flexiblen Klingen (23a, 23b) integral miteinander sind.

17. Uhrwerk, umfassend ein Antriebsorgan (1), ein Übersetzungsgetriebe (2), angetrieben von dem Antriebsorgan, **dadurch gekennzeichnet, dass** es einen Einstellungsmechanismus (9) nach einem der vorhergehenden Ansprüche umfasst, wobei das Hemmungsrad (11) von dem Übersetzungsgetriebe (2) angetrieben ist.

## Claims

1. Mechanism for adjusting an average speed in a timepiece movement, comprising an escapement wheel (4) and a mechanical oscillator (7), this mechanical oscillator (7) comprising a balance (6) and a plurality of resiliently flexible blades (23a, 23b), which are resiliently flexible in an oscillation plane (P₄), and which support and return the balance (6) in such a way that this balance (6) oscillates at an angle in the oscillation plane (P₄),
**characterized in that** it includes a pallet fork (5) comprising two rigid pallets (13, 14) which are rigidly connected to the balance (6) and are arranged to co-operate alternately with a toothing (12) of the escapement wheel (11) when the balance (6) oscillates at an angle, and **in that** each pallet (13, 14) includes an upstream side forming a resting surface (31) to block successively the teeth (15) of the toothing (12) toward the downstream counter to a driving motor torque of the escapement wheel (11), each pallet (13, 14) including an end surface forming an impulse surface (32) to receive successively impulses from the toothing (12).

2. Adjusting mechanism according to claim 1, **characterized in that** each resting surface (31) curves toward the other resting surface (31).

3. Adjusting mechanism according to claim 2, **characterized in that** each resting surface (31) curves toward the other resting surface (31) in a way so as to be able to slide on a tooth (15) of the toothing (12), during an angular oscillation of the balance (6), while not causing or substantially not causing rotation movement of the escapement wheel (11).

4. Adjusting mechanism according to any one of the claims 2 and 3, **characterized in that** each resting surface (31) has a substantially constant curvature in the direction of its length and has a center of curvature always positioned substantially at the same place, substantially on a virtual pivot axis (X₂-X'₂) of the balance (6).

5. Adjusting mechanism according to any one of the preceding claims, **characterized in that** the mechanical oscillator (7) comprises a mounting base (18), at least part of the resiliently flexible blades (23a, 23b) each comprising an end (24) rigidly joined to the mounting base (18), at least part of the resiliently flexible blades (23a, 23b) each comprising an end (25) rigidly joined to the balance (6).

6. Adjusting mechanism according to any one of the preceding claims, **characterized in that** the mechanical oscillator (7) comprises a mounting base (18), at least a first and a second resiliently flexible blade (23a) among the resiliently flexible blades each comprising two opposite ends, i.e. a first end (24) rigidly joined to the mounting base (18) and a second end (26), at least a third and a fourth resiliently flexible blade (23b) among the resiliently flexible blades each comprising two opposite ends, i.e. a first end (25) rigidly joined to the balance (6) and a second end (26), and **in that** the second ends (26) of the first, second, third and fourth resiliently flexible blades (23a, 23b) at least are rigidly joined to one another.

7. Mechanism for adjusting an average speed in a timepiece movement, comprising an escapement wheel (4) and a mechanical oscillator (7), this mechanical oscillator (7) comprising a balance (6) and a plurality of resiliently flexible blades (23a, 23b), which are resiliently flexible in an oscillation plane (P₄), and which support and return the balance (6) in such a way that this balance (6) oscillates at an angle in the oscillation plane (P₄),
**characterized in that** it includes a pallet fork (5) comprising two rigid pallets (13, 14) which are rigidly connected to the balance (6) and are arranged to co-operate alternately with a toothing (12) of the escapement wheel (11) when the balance (6) oscillates at an angle, **in that** the mechanical oscillator (7) comprises a mounting base (18), at least a first and a second resiliently flexible blade (23a) among the resiliently flexible blades each comprising two opposite ends, i.e. a first end (24) rigidly joined to the mounting base (18) and a second end (26), at least a third and a fourth resiliently flexible blade (23b) among the resiliently flexible blades each comprising two opposite ends, i.e. a first end (25) rigidly joined to the balance (6) and a second end (26), and **in that** the second ends (26) of the first, second, third and fourth resiliently flexible blades (23a, 23b) at least are rigidly joined to one another.

8. Adjusting mechanism according to claim 6 or 7, **characterized in that** the second ends (26) of the first, second, third and fourth resiliently flexible blades (23a, 23b) are rigidly joined to one another by a coupling part (27), the first ends (24) of the first and second resiliently flexible blades (23a) being angularly offset one with respect to the other by an angle (α) ranging between 80° and 150°, about an axis perpendicular to the plane of oscillation (P₄) and centered on the coupling part (27), the first ends (25) of the third and fourth resiliently flexible blades (23b) being angularly offset one with respect to the other by an angle (α) ranging between 80° and 150°, about an axis perpendicular to the plane of oscillation (P₄) and centered on the coupling part (27).

9. Adjusting mechanism according to claim 8, **characterized in that** the first ends (24) of the first and second resiliently flexible blades (23a) are offset one with respect to the other by an angle (α) on the order of 120°, about the axis perpendicular to the plane of oscillation (P₄) and centered on the coupling part (27), the first ends (25) of the third and fourth resiliently flexible blades (23b) being angularly offset one with respect to the other by an angle on the order of 120°, about the axis perpendicular to the plane of oscillation (P₄) and centered on the coupling part (27).

10. Adjusting mechanism according to any one of the claims 6 to 9, **characterized in that** the second ends (26) of the first, second, third and fourth resiliently flexible blades (23a, 23b) are rigidly joined to one another by a coupling part (27) through which passes a virtual pivot axis (X₂-X'₂) of the balance (6).

11. Adjusting mechanism according to any one of the claims 6 to 10, **characterized in that** the second ends (26) of the first, second, third and fourth resiliently flexible blades (23a, 23b) are rigidly joined to one another by a coupling part (27), the balance (6) having a center of gravity located substantially at the coupling part (27).

12. Adjusting mechanism according to any one of the preceding claims, **characterized in that** the mechanical oscillator (7) comprises a mounting base (18) including two stops (20) which are travel end stops for the balance (6) and which define a maximal angular course of the balance (6) by preventing this balance (6) from going beyond two opposite ends of this maximal angular course.

13. Adjusting mechanism according to any one of the preceding claims, **characterized in that** the balance (6) includes two opposite wings (28) and a crosspiece (21) connecting these two wings (28) together, at least part of the resiliently flexible blades (23a, 23b) each comprising an end (25) rigidly joined to the said crosspiece (21).

14. Mechanism for adjusting an average speed in a timepiece movement, comprising an escapement wheel (4) and a mechanical oscillator (7), this mechanical oscillator (7) comprising a balance (6) and a plurality of resiliently flexible blades (23a, 23b), which are resiliently flexible in an oscillation plane (P4), and which support and return the balance (6) in such a way that this balance (6) oscillates at an angle in the oscillation plane (P4),
**characterized in that** it includes a pallet fork (5) comprising two rigid pallets (13, 14) which are rigidly connected to the balance (6) and are arranged to co-operate alternately with a toothing (12) of the escapement wheel (11) when the balance (6) oscillates at an angle, and **in that** the balance (6) includes two opposite wings (28) and a crosspiece (21) connecting these two wings (28) together, at least part of the resiliently flexible blades (23a, 23b) each comprising an end (25) rigidly joined to the said crosspiece (21).

15. Adjusting mechanism according to any one of the preceding claims, **characterized in that** the mechanical oscillator (7) comprises a mounting base (18), at least part of the mounting base (18), at least part of the balance (6) and the resiliently flexible blades (23a, 23b) being integral with one another.

16. Mechanism for adjusting an average speed in a timepiece movement, comprising an escapement wheel (4) and a mechanical oscillator (7), this mechanical oscillator (7) comprising a balance (6) and a plurality of resiliently flexible blades (23a, 23b), which are resiliently flexible in an oscillation plane (P4), and which support and return the balance (6) in such a way that this balance (6) oscillates at an angle in the oscillation plane (P4),
**characterized in that** it includes a pallet fork (5) comprising two rigid pallets (13, 14) which are rigidly connected to the balance (6) and are arranged to co-operate alternately with a toothing (12) of the escapement wheel (11) when the balance (6) oscillates at an angle, and **in that** the mechanical oscillator (7) comprises a mounting base (18), at least part of the mounting base (18), at least part of the balance (6) and the resiliently flexible blades (23a, 23b) being integral with one another.

17. Timepiece movement, comprising a motor organ (1), a gear train (2) driven by the motor organ, **characterized in that** it comprises an adjusting mechanism (9) according to any one of the preceding claims, the escapement wheel (11) being driven by the gear train (2).
